**Europäisches Patentamt**

**European Patent Office**

**Office européen des brevets**

(19)

(11) Veröffentlichungsnummer : **0 492 244 B1**

(12)

# EUROPÄISCHE PATENTSCHRIFT

(45) Veröffentlichungstag der Patentschrift :
26.01.94 Patentblatt 94/04

(51) Int. Cl.⁵ : **C09C 1/00,** C01G 31/00,
C08K 3/24

(21) Anmeldenummer : **91121061.5**

(22) Anmeldetag : **09.12.91**

(54) **Bismutvanadatpigmente, Verfahren zu ihrer Herstellung sowie deren Verwendung.**

(30) Priorität : **20.12.90 DE 4040849**

(43) Veröffentlichungstag der Anmeldung :
**01.07.92 Patentblatt 92/27**

(45) Bekanntmachung des Hinweises auf die
Patenterteilung :
**26.01.94 Patentblatt 94/04**

(84) Benannte Vertragsstaaten :
**BE DE ES FR IT NL**

(56) Entgegenhaltungen :
EP-A- 0 239 526
EP-A- 0 304 399
DE-A- 1 106 898
PATENT ABSTRACTS OF JAPAN, vol. 14, no.
109 (C-695) 28. Februar 1990; & JP-A-13 13 585

(73) Patentinhaber : **BAYER AG**
**D-51368 Leverkusen (DE)**

(72) Erfinder : **Schwochow, Friedrich, Dr.**
**Kandinskystrasse 58**
**W-5090 Leverkusen (DE)**

EP 0 492 244 B1

## Beschreibung

Die vorliegende Erfindung betrifft neue Bismutvanadatpigmente, Verfahren zu ihrer Herstellung sowie deren Verwendung.

Cadmium-, blei- und chrom(VI)-haltige anorganische Pigmente werden aus ökologischer und toxikologischer Sicht in den letzten Jahren zunehmend kritisch bewertet. Auf der Suche nach Alternativprodukten wurden insbesondere bismutoxidhaltige Systeme auf ihre coloristischen Eigenschaften hin untersucht.

Im Vordergrung stand hierbei die auch als Mineral vorkommende Verbindung Bismutvanadat - $BiVO_4$ -, deren technische Herstellung in der DE-C 422 947 beschrieben ist. Die dort angegebene Methode - Fällung von Bismutnitrat mit Alkalivanadatlösung und anschließende Calcinierung des ausfallenden Gels - wurde in der DE-A 2 727 864 zu einem Verfahren zur Herstellung eines leuchtend schlüsselblumengelben Bismutvanadats mit Pigmenteigenschaften weiterentwickelt. Zur Verbilligung des an sich teuren Bismutvanadats wurden auch Mehrphasenpigmente mit Zusatzstoffen, wie Silikaten, Phosphaten oder Sulfaten, entwickelt, die in den deutschen Offenlegungschriften DE-A 2 933 778 ($BiVO_4$ -$BiPO_4$ -$AlPO_4$), DE-A 2 940 185 ($BiVO_4$ - $BiPO_4$-MeO) und DE-A 3 004 083 ($BiVO_4$ - $BaSO_4$) beschrieben werden.

Zur Verbesserung der pigmenttechnischen Eigenschaften wurden auch Modifizierungen der $BiVO_4$-Struktur durch Einbau von Fremddionen in das Gitter vorgenommen. Zum Stand der Technik gehören hier molybdän- und wolframhaltige Bismutvanadatpigmente (DE-A 3 106 625, DE-A 3 135 281, DE-A 3 221 338, EP-A 74 049 und EP-A 239 526). Bei den offenbarten Körpern liegen Mischungen aus strukturmodifiziertem $BiVO_4$ neben Bi-Molybdaten bzw. Erdalkaliwolframaten vor.

Zur Bewertung der im Rahmen der vorliegenden Erfindung beanspruchten neuen Substanzklasse im Vergleich zu den Strukturen nach dem Stand der Technik muß man zwischen vier unterschiedlichen Hauptmodifikationen des $BiVO_4$ unterscheiden: Das in der Natur als Mineral Pucherit vorkommende $BiVO_4$ besitzt orthorhombische Struktur - Raumgruppe Pnca mit $a_o = 5,33$ Å, $b_o = 5,05$ Å und $c_o = 12,00$ Å (J. Granzin u. D. Pohl, Z. f. Kristallografie, 169, 289 - 294 (1984) - und unterscheidet sich damit wesentlich vom synthetischen Grundtyp, der in einer monoklin verzerrten Abart des $CaWO_4$-Gitters (Scheelit-Typ) mit der Raumgruppe I 2/a kristallisiert (W. I. F. David u. A.M. Glazer, Phase Transitions, Vol. 1 (1979) 155-170). Zur Erhöhung der Stabilität des synthetischen Bismutvanadatgitters wird aber die reine tetragonale Modifikation der Raumgruppe I $4_1$/a angestrebt. Dieses tetragonale $BiVO_4$ mit Scheelit-Struktur erhält man in Gegenwart der obengenannten Fremddionen, wie Mo und W, allein oder in Kombination mit Erdalkaliionen. Nach H. Wienand und W. Ostertag (The Bulletin of the Bismuth Institute, 53 (1988) 1 - 4) besitzt das in Gegenwart von Natriummolybdat hergestellt $BiVO_4$ tetragonale Struktur mit den Gitterkonstanten $a_o = 5.147$ Å und $c_o = 11,722$ Å.

Zhang Wenpu et al. (The Bulletin of the Bismuth Institute, 56 (1989) 11) wiesen nach, daß die monokline Phase in die angestrebte tetragonale übergeht, wenn der Synthese Mo oder W zugesetzt werden. Auch aus den Angaben der Patentschrift EP-B 239 526 ist zu entnehmen, daß die hier beanspruchten Mo- und W-haltigen $BiVO_4$-Typen die tetragonale scheelit-artige Kristallstruktur besitzen.

Es existiert noch eine weitere, vom Scheelit-Typ zu unterscheidende tetragonale $BiVO_4$-Modifikation, die im Zirkontyp ($ZrSiO_4$-Struktur der Raumgruppe I $4_1$/amd) kristallisiert, die aber wegen ihres deutlich blasseren Gelbs nicht als Pigment geeignet ist.

Alle diese genannten synthetischen $BiVO_4$-Strukturen besitzen jedoch noch keine für den technischen Pigmenteinsatz ausreichende Stabilität gegenüber alkalischem Angriff bzw. bei thermischer Belastung, wie sie z.B. bei der Einarbeitung der Pigmente in Kunststoffe eine Grundforderung darstellen, Außerdem sind alle diese Pigmente mehr oder weniger lichtempfindlich, was sich durch eine Vergrauung, z.B. bei der Anwendung in Lacken, störend bemerkbar macht.

Aufgabe dieser Erfindung ist die Bereitstellung von Bismutvanadat-Pigmenten, die die geschilderten Nachteile nicht aufweisen.

Überraschenderweise hat sich gezeigt, daß man aus wäßriger Phase Zirkonium-haltige $BiVO_4$-Gele ausfällen kann, die beim anschließenden Calcinieren in die tetragonale Scheelit-Struktur des $BiVO_4$-Gitters übergehen, wobei die Zr-Ionen statistisch auf Bi-Plätze verteilt sind Das war umso weniger zu erwarten, als bei Versuchen zum stabilisierenden Einbau von $ZrO_2$ in die $BiVO_4$-Struktur nach der thermischen Methode durch direkte Umsetzung der Festkörper lediglich Mischungen aus monoklinem $BiVO_4$ mit $ZrO_2$ entstehen (DE-A 1 106 898).

Gegenstand dieser Erfindung sind somit Bismutvanadatpigmente, die dadurch gekennzeichnet sind, daß sie 0,1 bis 0,3 Mol/$ZrO_2$ je Mol $BiVO_4$ enthalten und in der tetragonalen Kristallstruktur des Scheelits vorliegen.

Die erfindungsgemäßen Pigmente bestehen aus der reinen, einphasigen, tetragonalen, scheelit-ähnlichen $BiVO_4$-Struktur mit der Raumgruppe I $4_1$/a und Gitterkonstanten von $a_o = 5,12$ bis 5,16 Å bzw. $c_o = 11,63$ bis 11,67 Å, wobei nach Strukturuntersuchungen mittels Röntgenpulverdiffraktometrie nach dem Rietveldverfahren das Zr auf Bi-Plätzen angeordnet ist.

Die erfindungsgemäße Substanzgruppe wird beispielsweise durch die in Tabelle 1 angegebenen Röntgenpulverdaten charakterisiert.

**Tabelle 1: Röntgenpulverdaten (Strahlung $Cu_{Ka}$) von tetragonalem, Zr-haltigem $BiVO_4$**

| (hkl) | d-Wert | 2-0 | Int |
|---|---|---|---|
| 101 | 4,695981 | 18,8877 | 34,2 |
| 112 | 3,081228 | 28,9540 | 100,0 |
| 004 | 2,915221 | 30,6420 | 14,0 |
| 200 | 2,564547 | 34,9581 | 13,3 |
| 211 | 2,252512 | 39,9933 | 14,5 |
| 105 | 2,121466 | 42,5800 | 6,6 |
| 213 | 1,975891 | 45,8890 | 7,9 |
| 204 | 1,922808 | 47,2316 | 17,8 |
| 220 | 1,816907 | 50,1686 | 10,0 |
| 116 | 1,713723 | 53,4203 | 9,9 |
| 215 | 1,638945 | 56,0667 | 6,5 |
| 312 | 1,564262 | 59,0000 | 16,2 |
| 224 | 1,541170 | 59,9738 | 8,1 |

Gegenstand dieser Erfindung ist auch ein Verfahren zur Herstellung der erfindungsgemäßen Bismutvanadat-Pigmente. Dieses ist dadurch gekennzeichnet, daß Mischfällungen aus wäßrigen Bismut-, Vanadat- und Zirkoniumsalzlösungen nach Abtrennen, Waschen und Trocknen einer Temperaturbehandlung unterworfen und anschließend auf Pigmentfeinheit aufgemahlen werden.

Das bevorzugte Ausgangsmaterial für die Herstellung der erfindungsgemäßen Substanzen sind zirkoniumhaltige Bismutvanadat-Gele, die aus wäßrigen Bi-Zr-Salzlösungen mit alkalischen Vanadatlösungen hergestellt werden.

Als Quelle für Bismut bzw. für Zirkonium kann jedes $Bi^{3+}$- bzw. $Zr^{4+}$-Salz Verwendung finden, doch wird im Rahmen der vorliegenden Erfindung bevorzugt Bismutnitrat bzw. Zirkoniumsulfat eingesetzt.

Die Vanadium-Komponente wird in Form von Alkalivanadatlösungen zugegeben, die im allgemeinen durch Auflösen von $V_2O_5$-Pulver in der entsprechenden Menge Alkalihydroxid, bevorzugt werden NaOH und KOH, hergestellt werden. Es können aber genausogut handelsübliche Vanadate, wie z.B. $Na_3VO_4$ und $K_3VO_4$, selbst verwendet werden.

Zur Herstellung der Ausgangsgele trägt man beispielsweise in eine Vorlage einer sauren Bi-Salzlösung die Lösung des Zirkoniumsalzes oder das feste Salz selbst ein und fällt diese Mischlösung anschließend unter Einstellung eines pH-Bereiches von bevorzugt zwischen 2,5 und 6,5 durch Zugabe der entsprechenden Menge an Alkalivanadatlösung. Die ausgefallenen Gele werden danach vorteilhaft intensiv gerührt und homogenisiert und anschließend von ihren Mutterlaugen durch Filtrieren, Zentrifugieren oder Dekantieren abgetrennt. Nach einem Waschschritt erfolgt die Geltrocknung, wobei die üblichen Trockenaggregate, wie Trockenschränke, Bandtrockner, Walzentrockner oder Sprühtrockner, zur Anwendung kommen können.

Anschließend werden die zirkoniumhaltigen, amorphen Bismutvanadat-Ausgangssubstanzen geglüht. Diese Glühung kann in den gebräuchlichen Aggregaten, wie z.B. Muffelöfen, Schachtöfen, Drehrohr- und Drehtrommelöfen, durchgeführt werden.

Zum Glühen der Ausgangssubstanzen werden bevorzugt Temperaturen zwischen 250 und 550°C und Zeiten zwischen 0,5 und 16 Stunden eingehalten. Zur Herstellung reiner Produkte erfolgt die Umsetzung vorzugsweise im Temperaturbereich zwischen 350° und 450° in 0,5 bis 4 Stunden Glühdauer, Zu geringe Temperaturen bzw. zu kurze Glühzeiten können zu Reaktionsprodukten führen, die noch amorphe Anteile enthalten. Umgekehrt ergeben zu lange Zeiten bzw. zu hohe Glühtemperaturen fremdphasige, schmutzig nach Braungrün verfärbte Substanzen.

Im Anschluß an die Glühung werden die erfindungsgemäßen Substanzen je nach ihrem Verwendungszweck unterschiedlich aufgearbeitet, wobei besonders der Zerkleinerungsprozeß, in Mörser-, Schlagkreuz-, Kugel- oder Sandmühlen und der anschließende Waschschritt zur Entfernung der überschüssigen Salze aus der Neutralisationsreaktion der jeweiligen Anwendung angepaßt werden müssen, wie es für die Pigmentherstellung Stand der Technik ist. Bei der in der Pigmentindustrie üblichen Aufarbeitung des Ofenklinkers durch Naßmahlung in Kugelmühlen erhält man beispielsweise Produkte mit Oberflächen (nach BET) zwischen 5 und 30 $m^2/g$ und Teilchen von bis zu 60 % < 1,5 µm Durchmesser.

Der Farbton der erfindungsgemäßen Körper hängt vom Zirkoniumgehalt und der Teilchengröße ab, doch lassen sich die Grenzen der a*- und b*-Werte im Farbfeld (gemessen in Alkydal® F 48-Lack-Purton - mit 10 % PVK nach DIN 6174) folgendermaßen angeben:

a* = 5 bis -12

b* = 75 bis 90

Die erfindungsgemäßen zirkoniumhaltigen, tetragonalen Bismutvanadat-Pigmente eignen sich als leuchtend gelbe Körper vorwiegend in der Pigmentindustrie als Pigmente für Lacke und sonstige Anstrichstoffe bzw, zum Einfärben von Kunststoffen.

Gegenstand dieser Erfindung ist somit auch die Verwendung der erfindungsgemäßen Bismutvanadat-Pigmente zur Einfärbung von Lacken und Kunststoffen.

Die folgenden Beispiele sollen die Erfindung näher erläutern, ohne daß darin jedoch eine Einschränkung zu sehen ist.

Beispiel 1

167,3 g $Bi(NO_3)_3$ . 5 $H_2O$ wurden in 1500 ml $H_2O$ eingerührt und nach Ansäuern mit 180 g $HNO_3$ (65 Gew.-%, ρ = 1,39 g/ml) vollständig aufgelöst. Anschließend wurde zu dieser Bismutnitratlösung 13,5 g $Zr(SO_4)_2 \cdot 4H_2O$ zugegeben. Die Fällung erfolgte mit einer Kaliumvanadatlösung, die durch Auflösen von 31,4 g technischem Vanadiumpentoxid (> 99 Gew.-% $V_2O_5$) in 330 g 50 %iger Kalilauge (ρ = 1,51 g/ml) hergestellt worden war. Die Fälldauer betrug 30 Minuten. Nach der Fällung wurde das Gel noch 10 Minuten mit einem schnellaufenden Rührwerk (z.B. Mischturbine der Firma Kotthoff) homogenisiert. Während der Fällung bzw. Nachrührzeit wurde der pH-Wert auf 3 bis 4 einreguliert. Aus den eingesetzten Mengen ergab sich für das Gel eine molare Zusammensetzung von 0,9 $BiVO_4$ ·0,1 $ZrO_2$ bzw. 1 $BiVO_4$ ·0,11 $ZrO_2$. Das Gel wurde von der Mutterlauge über eine Nutsche abgetrennt, einmal in dest., $H_2O$ angeschlämmt und danach erneut abfiltriert. Die Trocknung erfolgte bei 120°C im Trockenschrank. Das trockene Gel wurde zur Pigmentbildung 3 Stunden bei 400°C getempert und das Reaktionsprodukt anschließend in einer Kugelmühle 15 Minuten naß gemahlen, Nach erneutem Auswaschen, Trocknen und Desagglomerieren in einer Schlagkreuzmühle erhielt man ein kräftig leuchtend gelbes Pulver mit einer Oberfläche (nach BET) von 16 $m^2/g$. Die analytisch ermittelte Zusammensetzung des Pigments betrug (molare Verhältnisse) Bi : V : Zr = 1 : 0,997 : 0,105. Das Reaktionsprodukt zeigte die tetragonale Struktur des Scheelits mit Gitterkonstanten von $a_o$ = 5,139 Å und $c_o$ = 11,636 Å. Die Farbwerte (in Alkydal® F 48-Harz (s.o.)) lagen bei

L* = 86,1      a* = -6,1

C* = 82,2      b* = 81,9

Beispiel 2

Das vorliegende Beispiel wurde völlig analog zu Beispiel 1 mit einer molaren Gelzusammensetzung von 0,9 $BiVO_4 \cdot 0,1$ $ZrO_2$ durchgeführt. Die Änderung gegenüber Beispiel 1 bestand in einer verkürzten Glühdauer. Zur Pigmentbildung wurde das Gel 0,5 Stunden auf 400°C erhitzt. Nach der Aufarbeitung analog Beispiel 1 erhielt man ein leuchtend gelbes Produkt mit einer Oberfläche (nach BET) von 17 $m^2/g$. Die tetragonale Kristallstruktur vom Schellit-Typ besaß die Gitterkonstanten $a_o$ = 5,129 Å und $c_o$ = 11,661 Å. Die Farbwerte lagen bei:

L* = 85,5      a* = -6,5

C* = 80,3      b* = 80,0

Beispiel 3

In eine Vorlage von 20 1 $H_2O$ wurden 1940 g $BiONO_3$ (80 % $Bi_2O_3$) und 263 g $Zr(SO_4)_2 \cdot 4$ $H_2O$ eingerührt und mit soviel 65 %iger $HNO_3$ versetzt, daß eine klare Lösung resultierte. Gefällt wurde mit einer Kaliumvanadatlösung aus 606 g $V_2O_5$ in 6600 g 50 %iger Kalilauge mit 200 ml $H_2O$. Die Fällung erfolgte innerhalb von 10 Minuten bei pH = 3,5. Der Ansatz mit den molaren Mengen 0,9 $BiVO_4 \cdot 0,1$ $ZrO_2$ wurde völlig analog zu Beispiel 1 weiterverarbeitet. Zur Pigmentbildung wurde das bei 120°C getrocknete $BiVO_4/ZrO_2$-Gel 0,5 Stunden

Alkydal® = Alkydharz der Bayer AG

EP 0 492 244 B1

bei 400°C geglüht Nach Mahlen, Trocknen und Desagglomerieren wurde ein brillantgelber Körper mit einer Oberfläche (nach BET) von 19 m²/g erhalten. Das Röntgenpulverdiagramm zeigte die tetragonale Kristallstruktur des Schellits. Die Farbwerte lagen bei:

L* = 88,6      a* = -9,45
C* = 82,3      b* = 81,78

## Beispiel 4

Das vorliegende Beispiel zeigt die Herstellung des erfindungsgemäßen Pigments bei erhöhtem Zirkongehalt.

In einer Vorlage aus 1500 g $H_2O$, angesäuert mit 100 g $HNO_3$ (65 %ig, $\rho$ = 1,39 g/ml), wurden 167,3 g $(Bi(NO_3)_3 \cdot 5H_2O$ aufgelöst. In diese Lösung wurden 30,6 g festes $Zr(SO_4)_2 \cdot 4\,H_2O$ eingerührt. Zur Fällung wurde eine Kaliumvanadatlösung aus 31,4 g $V_2O_5$ (> 99 Gew.-% $V_2O_5$) in 190 g 50 %iger KOH ($\rho$ = 1,51 g/ml) und 1500 ml $H_2O$ hergestellt. Die Gelfällung erfolgte bei pH = 6 in einem Guß. Zur Homogenisierung wurde mit der Kotthoff-Mischsirene 10 Minuten nachgerührt. Aus den vorgegebenen Mengen resultierte eine molare Gelzusammensetzung von 1 $BiVO_4 \cdot 0{,}25\ ZrO_2$. Die Glühung des bei 120°C getrockneten $BiVO_4/ZrO_2$-Gels erfolgte bei 400°C (4 Stunden).

Nach der Aufarbeitung zum Pigment, entsprechend den Beispielen 1-3, wies die Substanz eine Oberfläche (nach BET) von 13 m²/g auf. Es zeigte die reine tetragonale Kristallstruktur des Scheelits. Bedingt durch den höheren Zirkongehalt ergab sich eine geringe Verblassung des Gelbtons bei gleichzeitger Verschiebung der Farbwerte in Richtung Rot:

L* = 84,5      a* = -5,3
C* = 77,5      b* = 77,3

Das im vorliegenden Beispiel hergestellte zirkoniumreiche $BiVO_4$-Pigment zeigt die erfindungsgemäße hohe Stabilität gegenüber Natronlauge:

Behandelt man 15 g des im vorliegenden Beispiel hergestellten Materials 30 Minuten bei 100°C in 150 ml 11 %iger Natronlauge, so erfolgt nur ein geringer Angriff auf die tetragonale Kristallstruktur. Es liegt nach der NaOH-Behandlung weitgehend unverändert $BiVO_4$ vor. Dagegen ergibt sich mit zirkoniumfreiem, monoklinen $BiVO_4$ (Herstellung siehe Beispiel 7) im Vergleich dazu unter den gleichen Bedingungen eine völlige Zerstörung der $BiVO_4$-Struktur, die unter Abgabe von Vanadat in unterschiedliche $Bi_2O_3$-Modifiktationen (bevorzugt $\delta$ und $\gamma$-$Bi_2O_3$) umgewandelt wird.

## Beispiel 5

Das vorliegende Beispiel zeigt, daß bei Zirkoniumgehalten > 0,3 Zr/1 $BiVO_4$ (molar) die erfindungsgemäßen Körper nicht mehr rein erhalten werden können.

Die Gelfällung wurde völlig analog zu Beispiel 1 vorgenommen, doch wurden diesmal in der Bismutnitratlösung 52,5 g festes $Zr(SO_4)_2 \cdot 4H_2O$ aufgelöst. Damit wird der Zirkoniumgehalt auf 0,43 $ZrO_2$/1 $BiVO_4$ (molar) angehoben. Das bei 120°C getrocknete Gel wurde unterschiedlichen Glühbedingungen unterworfen, die in Tab. 2 zusammengefaßt sind. Aus dieser Zusammenstellung geht hervor, daß bis 350°C keine Umsetzung zum erfindungsgemäßen $BiVO_4$ erreicht wird. Umgekehrt ergeben intensivere Glühbedingungen bereits Reaktionsprodukte, die mit unerwünschten Fremdphasen verunreinigt sind. Gleichzeitig zeigen auch die Farbwerte nicht mehr den reinen Gelbton der erfindungsgemäßen Pigmente. Es ergibt sich eine deutliche Farbverschiebung in den Rotbereich bei gleichzeitiger Absenkung des Gelbanteils.

5

Tabelle 2: Glühung einer Gelfällung der Zusammensetzung $BiVO_4 \cdot 0,43\ ZrO_2$

| Beispiel Nr. | Glühbedingungen Zeit h | Temp. °C | Hauptphase nach Röntgen-Diffraktometrie | Farbwerte L* | C* | a* | b* |
|---|---|---|---|---|---|---|---|
| 5 a | 1 | 250 | amorph | 81,2 | 70,0 | -6,9 | 69,7 |
| 5 b | 1 | 300 | amorph | 78,1 | 63,0 | -3,8 | 62,8 |
| 5 c | 1 | 350 | amorph | 78,2 | 60,7 | -3,4 | 60,6 |
| 5 d | 16 | 400 | $BiVO_4$* + Fremdphase | 82,8 | 78,9 | -4,0 | 78,8 |
| 5 e | 16 | 500 | $BiVO_4$* + Fremdphase | 80,7 | 77,7 | -1,3 | 77,7 |

* monoklin und tetragonal

Beispiel 6

Das vorliegende Beispiel zeigt, daß die erfindungsgemäßen $BiVO_4$-Pigmente mit Scheelit-Struktur auch nicht erhalten werden, wenn die Zirkoniummenge unter die in den Patentansprüchen angegebene Konzentration abgesenkt wird.

Der Versuch wurde völlig analog zu Beispiel 1 mit den dort angegebenen Mengen durchgeführt, jedoch betrug die in die $Bi(NO_3)_3$-Lösung zugegebene $Zr(SO_4)_2 \cdot 4 H_2O$-Menge nur 6,5 g. Somit lag ein Molverhältnis von 1 $BiVO_4 \cdot 0,05 ZrO_2$ vor. Nach Abtrennen, Waschen und Trocknen wurde dieses zirkoniumarme Gel bei 400°C 2 Stunden geglüht. Man erhielt ein nur sehr blaßgelbes Pigment mit den Farbwerten:

L* = 87,6      a* = -7,3
C* = 59,7      b* = 59,3

Wie die Röntgenpulveranalyse zeigte, lag nicht die erfindungsgemäße, tetragonale Struktur des Scheelit-Gitters vor; es hatte sich vielmehr eine andere tetragonale Modifikation des $BiVO_4$, nämlich die des Zirkontyps, gebildet, die keine für die Verwendung als Pigment ausreichende Farbgebung aufweist.

Beispiel 7

Das vorliegende Beispiel zeigt die hohe thermische Stabilität der erfindungsgemäßen Gelbpigmente bei der Einfärbung von Kunststoffen im Vergleich zu den $BiVO_4$-Pigmenten nach dem Stand der Technik.

Die Herstellung des erfindungsgemäßen Materials erfolgte nach der Standardmethode in Beispiel 1 mit einem Gel der Zusammensetzung 0,9 $BiVO_4 \cdot 0,1 ZrO_2$. Nach scharfem Absaugen und Trocknen (120°C) wurde das Gel 3 Stunden bei 400°C getempert. Nach Naßmahlung (15 Minuten Kugelmühle) des Materials wurden bei dieser Pigmentcharge folgende Eigenschaftsdaten ermittelt:

Spez. Oberfläche (nach BET)     7,9 m²/g
Struktur                        reine tetragonale Scheelit-Struktur
                                $a_o$ = 11,666 Å
                                $c_o$ = 5,124 Å
Farbwerte                       L* = 84,5      a* = -4,6
                                C* = 83,1      b* = 83,0

Vergleichssubstanzen

Das erfindungsgemäße Material wurde mit einem zirkoniumfreien monoklinen $BiVO_4$ (Vergleichssubstanz I) und mit einem tetragonalen, mit $CaWO_4$ modifizierten $BiVO_4$ (Vergleichssubstanz II) verglichen.

Vergleichssubstanz I

Die Durchführung erfolgte völlig analog zu obigem Beispiel 7, wobei allerdings der $Bi(NO_3)_3$-Lösung kein Zirkoniumsulfat zugesetzt wurde. Nach Fällen, Abtrennen und Trocknen des Gels wurde 3 Stunden bei 400°C geglüht. Nach dem Aufmahlen lag ein gelbes Pigment mit einer spez. Oberfläche (nach BET) von 7,7 m²/g vor. Die Substanz besaß jedoch nicht die erfindungsgemäße tetragonale Struktur. Das Röntgenpulverdiagramm zeigte eine starke monokline Aufspaltung. Die Gitterkonstanten betrugen:

$a_o$ = 5,193 Å
$b_o$ = 11,712 Å
$c_o$ = 5,096 Å
$\alpha$ = 90,381°

Die Farbwerte (gemessen in Alkydal® F 48) lagen bei:

L* = 88,4      a* = -11,0
C* = 83,4      b* = 82,6

Vergleichssubstanz II

Die Durchführung erfolgte wiederum in strenger Anlehnung an das vorausgehende Beispiel 7, doch wurden diesmal der Bismutnitratlösung (aus 167,3 g $Bi/NO_3)_3 \cdot 5 H_2O$) kein Zirkoniumsulfat, sondern 8,15 g $Ca(NO_3)_2 \cdot 4 H_2O$ zugesetzt. Entsprechend wurden in die Kaliumvanadatlösung (aus 31,4 g $V_2O_5$) 11,2 g $K_2WO_4$ gegeben. Das aus diesen Lösungen gefällte Gel besitzt die molare Zusammensetzung $BiVO_4 \cdot 0,1 CaWO_4$. Abtrennen, Trocknen und Glühen des Gels erfolgte wie oben. Das erhaltene schmutzig-grünstichige Gelbpigment war durch folgende Daten charakterisiert:

Spez. Oberfläche (nach BET)     21 m²/g
Struktur                        reine, tetragonale Scheelit-Struktur
                                $a_o$ = 5,5151 Å

EP 0 492 244 B1

$$c_o = 11,639 \text{ Å}$$

Farbwerte $\quad$ L* = 84,9 $\qquad$ a* = -8,3

$\qquad\qquad\quad$ C* = 71,2 $\qquad$ b* = 70,7

Die erhöhte thermische Stabilität der erfindungsgemäßen Pigmente gegenüber Kunststoffen im Vergleich zu den herkömmlichen Substanzen auf BiVO$_4$-Basis (Vergleichssubstanzen I und II) zeigt der folgende

Hitzebeständigkeitstest

Die drei zu vergleichenden Pigmente wurden in einer Menge von 1 % als Pigment-Volumen-Konzentration (PVK) in Verstolen ® A 6016 eingearbeitet und in einer Spritzgußmaschine einem Hitzebeständigkeitstest unterworfen.

Dazu wurden Proben bei 220, 240, 260 und 280°C jeweils 5 Minuten belastet und der Farbabstand $\Delta$E* nach DIN 6174 (bezogen auf die bei 200°C gespritzte Platte) ermittelt.

Die Ergebnisse sind in Tabelle 3 zusammengestellt. Das erfindungsgemäße Pigment zeigt danach eine deutlich bessere Temperaturstabilität in Kunststoff als die herkömmlichen Pigmente.

Vestolen® Hochdruckpolyethylen der Firma Hüls AG

Tabelle 3: Farbabstände unterschiedlicher Pigmente auf BiVO$_4$-Basis nach thermischer Belastung in Polyolefin

| Untersuchte BiVO$_4$-Type | Charakteristik | Temp. | Farbabstände ΔE* |
|---|---|---|---|
| Substanz aus Beispiel 7 | erfindungsgemäßes, tetragonales BiVO$_4$ mit Scheelit-Struktur<br><br>Fremdionen: Zr | 220<br>240<br>260<br>280 | 1,5<br>2,6<br>5,2<br>10,2 |
| Vergleichs-substanz I | herkömmliches, monoklines BiVO$_4$<br><br>Fremdionen: keine | 220<br>240<br>260<br>280 | 9,2<br>12,5<br>19,9<br>29,7 |
| Vergleichs-substanz II | herkömmliches, tetragonales BiVO$_4$ mit Scheelit-Struktur<br><br>Fremionen: Ca, W | 220<br>240<br>260<br>280 | 6,5<br>8,2<br>10,3<br>14,3 |

[1] monoklin und tetragonal

Beispiel 8

Die in Beispiel 7 für den Kunststoff-Stabilitätstest eingesetzten Substanzen wurden auf ihre Lichtempfindlichkeit untersucht. Dazu wurden Lackkarten mit 10 % PVK in Alkydal® F 48-Lack (Purton) 2 Stunden dem Licht einer UV-Lampe ausgesetzt. Die nach DIN 6174 ermittelten Farbabstände zwischen der belichteten Zone im Vergleich zu einer abgedeckten Fläche der Lackkarte betrugen für die einzelnen Pigmente:

9

| Pigment | Charakteristik | $\Delta E*$ nach Bestrahlung |
|---|---|---|
| Substanz aus Beispiel 7 | erfindungsgemäßes Zr-haltiges $BiVO_4$ | 0,7 |
| Vergleichs- substanz I | herkömmliches, mono- klines $BiVO_4$ | 1,2 |
| Vergleichs- substanz II | herkömmliches, tetra- gonales $BiVO_4$ mit $CaWO_4$ | 6,7 |

**Patentansprüche**

**Patentansprüche für folgende Vertragsstaaten : BE, DE, FR, IT, NL**

1. Bismutvanadat-Pigmente, dadurch gekennzeichnet, daß sie 0,1 - 0,3 Mol $ZrO_2$ je 1 Mol $BiVO_4$ enthalten und in der tetragonalen Kristallstruktur des Scheelits vorliegen.

2. Verfahren zur Herstellung der Bismutvanadat-Pigmente gemäß Anspruch 1, dadurch gekennzeichnet, daß Mischfällungen aus wäßrigen Bismut-, Vanadat- und Zirkoniumsalzlösungen nach Abtrennen, Waschen und Trocknen einer Temperaturbehandlung unterworfen und anschließend auf Pigmentfeinheit aufgemahlen werden.

3. Verfahren gemäß Anspruch 2, dadurch gekennzeichnet, daß die Temperaturbehandlung bei Temperaturen zwischen 250 und 550°C und Zeiten zwischen 0,5 und 16 Stunden durchgeführt wird.

4. Verwendung der Bismutvanadat-Pigmente gemäß einem oder mehreren der Ansprüche 1 bis 3 zur Einfärbung von Lacken und Kunststoffen.

**Patentansprüche für folgenden Vertragsstaat : ES**

1. Verfahren zur Herstellung von Bismutvanadat-Pigmenten,die 0,1 - 0,3 Mol $ZrO_2$ je 1 Mol $BiVO_4$ enthalten und in der tetragonalen Kristallstruktur des Scheelits vorliegen, dadurch gekennzeichnet, daß Mischfällungen aus wäßrigen Bismut-, Vanadat- und Zirkoniumsalzlösungen nach Abtrennen, Waschen und Trocknen einer Temperaturbehandlung unterworfen und anschließend auf Pigmentfeinheit aufgemahlen werden.

2. Verfahren gemäß Anspruch 1, dadurch gekennzeichnet, daß die Temperaturbehandlung bei Temperaturen zwischen 250 und 550°C und Zeiten zwischen 0,5 und 16 Stunden durchgeführt wird.

3. Verwendung der gemäß einem der Ansprüche 1 oder 2 hergestellten Bismutvanadat-Pigmente zur Einfärbung von Lacken und Kunststoffen.

**Claims**

**Claims for the following Contracting States : BE, DE, FR, IT, NL**

1. Bismuth vanadate pigments, characterised in that they contain from 0.1 to 0.3 mol of $ZrO_2$ per mol of $BiVO_4$ and are present in the form of the tetragonal crystal structure of scheelite.

2. A process for the preparation of the bismuth vanadate pigments according to Claim 1, characterised in that mixed precipitates of aqueous bismuth, vanadate and zirconium salt solutions are subjected to a temperature treatment after they have been separated off, washed and dried and are then ground to pigment fineness.

3. A process according to Claim 2, characterised in that the temperature treatment is carried out at temperatures of from 250 to 550°C for periods of from 0.5 to 16 hours.

4. Use of the bismuth vanadate pigments according to one or more of Claims 1 to 3 for colouring lacquers and synthetic resins.

**Claims for the following Contracting State : ES**

1. A process for the preparation of bismuth vanadate pigments which contain from 0.1 to 0.3 mol of $ZrO_2$ per mol of $BiVO_4$ and are present in the form of the tetragonal crystal structure of scheelite, characterised in that mixed precipitates of aqueous bismuth, vanadate and zirconium salt solutions are subjected to a temperature treatment after they have been separated off, washed and dried and are then ground to pigment fineness.

2. A process according to Claim 1, characterised in that the temperature treatment is carried out at temperatures of from 250 to 550°C for periods of from 0.5 to 16 hours.

3. Use of the bismuth vanadate pigments prepared according to one of the claims 1 or 2 for colouring lacquers and synthetic resins.

**Revendications**

**Revendications pour les Etats contractants suivants: BE, DE, FR, IT, NL**

1. Pigments de vanadate de bismuth, caractérisés en ce qu'ils contiennent 0,1 à 0,3 mole de $ZrO_2$ par mole de $BiVO_4$ et en ce qu'ils se présentent avec la structure cristalline tétragonale de la scheelite.

2. Procédé de production des pigments de vanadate de bismuth suivant la revendication 1, caractérisé en ce qu'on soumet des coprécipités de solutions aqueuses de sels de bismuth, de vanadium et de zirconium après séparation, lavage et séchage, à un traitement à la chaleur, puis on les broie au degré de finesse de pigments.

3. Procédé suivant la revendication 2, caractérisé en ce que le traitement à la chaleur est conduit à des températures comprises entre 250 et 550°C et pendant des durées de 0,5 à 16 heures.

4. Utilisation des pigments de vanadate de bismuth suivant une ou plusieurs des revendications 1 à 3 pour la coloration de peintures et de matières plastiques.

**Revendications pour l'Etat contractant suivant : ES**

1. Procédé de production de pigments de vanadate de bismuth qui contiennent 0,1 à 0,3 mole de $ZrO_2$ par mole de $BiVO_4$ et qui se présentent avec la structure cristalline tétragonale de la scheelite, caractérisé en ce qu'on soumet des coprécipités de solutions aqueuses de sels de bismuth, de vanadium et de zirconium après séparation, lavage et séchage, à un traitement à la chaleur, puis on les broie au degré de finesse de pigments.

2. Procédé suivant la revendication 1, caractérisé en ce qu'on conduit le traitement à la chaleur à des températures comprises entre 250 et 550°C et pendant des durées de 0,5 à 16 heures.

3. Utilisation des pigments de vanadate de bismuth produits selon l'une des revendications 1 et 2 pour la coloration de peintures et de matières plastiques.